# EUROPEAN PATENT APPLICATION

(11) **EP 2 592 448 A1**
(43) Date of publication of application: **15.05.2013**
(21) Application number: 12182132.6
(22) Date of filing: 29.08.2012
(51) Int. Cl.: G02B 6/00

(54) **Backlight unit and display apparatus having the same**

(30) Priority: 09.11.2011 KR 20110116314
(71) Applicant: Samsung Electronics Co., Ltd., Suwon-si, Gyeonggi-do, 443-742 (KR)
(72) Inventor: Kim, Tae-bae, Gyeonggi-do (KR); Kim, Dong-hwan, Seoul (KR)
(74) Representative: Hewett, Jonathan Michael Richard

(57) **Abstract**

Disclosed are a backlight unit and light guide of a display apparatus and a display apparatus having the same, the backlight unit including: a light source unit which is disposed on at least one of edges of a display panel; and a light guide plate which is disposed at rear of the display panel so as to transmit light radiated from the light source unit to the display panel and including a lower side formed with a plurality of distributed unit patterns reflecting the radiated light and an upper side transmitting the light reflected by the unit pattern(s) engraved into the lower side and reflecting the radiated light to the upper side.

## Description

The present invention relates to a backlight unit which generates and provides light to a display panel so that images are displayed on the display panel and a display apparatus having the same, and more particularly to a backlight unit which has a simple structure to improve efficiency of light provided to a display panel and a display apparatus having the same.

A display apparatus is a device which includes a display panel displaying images to present broadcast signals or various formats of image signals/image data, and is configured as a television (TV), computer monitor, etc. The display panel is configured in various types, such as a liquid crystal display (LCD) panel, a plasma display panel (PDP), Organic Light Emitting Display (OLED), etc., and is employed for various display apparatuses. Here, when an LCD panel that does not generate light by itself is employed as a display panel, a display apparatus includes a backlight unit which generates and provides light to the display panel.

A backlight unit of a display apparatus adopts, as a light source generating light, light emitting diodes (LEDs) having excellent energy efficiency and response rate as compared with a cold cathode fluorescent lamp conventionally used. A backlight unit may be classified into a direct type and an edge type based on position of a light source relative to a light guide plate in arrangement.

In a direct-type backlight unit, light sources are disposed parallel with a rear side of a light guide plate and each transmit light directly to a front display panel. However, in an edge-type backlight unit, light sources are disposed in a bar shape along an edge of a light guide plate, and light from the light sources enters a lateral side of the light guide plate and is then transmitted to a display panel.

Accordingly, aspects of one or more exemplary embodiments of the present invention may be achieved by providing a backlight unit of a display apparatus, the backlight unit including: a light source unit which is disposed on at least one of edges of a display panel; and a light guide plate which is disposed at rear of the display panel so as to transmit light radiated from the light source unit to the display panel and including a lower side formed with a plurality of distributed unit patterns reflecting the radiated light and an upper side transmitting the light reflected by the unit patterns, any one of the unit patterns including a particle shape engraved into the lower side and totally reflecting the radiated light to the upper side.

The unit patterns may include a bottom side parallel with the lower side and a vertex facing the upper side and are engraved into the lower side.

The bottom side of the unit patterns may be polygonal-shaped.

The unit patterns may have a ratio of width to height of 100:30 to 100:34.

The unit patterns may have a pyramid shape having a square-shape bottom side.

A ratio of a length of one edge of the bottom side to a length from the bottom side to the vertex may be 100:30 to 100:34.

The unit patterns may have a conical shape having a circular bottom side.

A ratio of a diameter of the bottom side to a length from the bottom side to the vertex may be 100:30 to 100:34.

An angle of the vertex may be in a range of 110 to 120 degrees.

A width of the unit patterns may be 100 µm or less.

The backlight unit may further include a prism sheet which is interposed between the display panel and the upper side of the light guide plate and collecting light exiting from the upper side.

The unit patterns may reflect the radiated light such that a main angle of the light exiting from the upper side is in a range of 55 to 65 degrees with respect to a surface of the upper side, and the prism sheet may collect the light exiting from the upper side to be at an angle in a range of 85 to 95 degrees with respect to the surface of the upper side.

Aspects of one or more exemplary embodiments may be achieved by providing a light guide for a display panel including a light guide plate with an upper surface facing a display panel and a lower surface facing a reflection plate, one or more light emitting elements emitting a light towards the light guide plate substantially parallel to the surface of the display panel, a plurality of unit patterns distributed on the lower side of the light guide plate reflecting the light from the emitting elements to the upper surface of the light guide plate, and a prism sheet situated between the upper surface of the light guide plate and the display panel guiding the light from the emitting elements to be substantially perpendicular to the surface of the display panel. The unit patterns may have a ratio of width to height of 100:30 to 100:34. The unit patterns may be pyramid shaped or conical shaped. The width of the unit patterns may be less than or equal to 100 µm. The light guide plate may reflect the light such that an angle of the light exiting from the upper surface of the light guide plate is between 55 and 65 degrees with respect the upper surface of the light guide plate, and the prism sheet may guide the light such that an angle of the light exiting the prism sheet is between 85 and 95 degrees with respect to the upper surface of the light guide plate.

Other aspects of one or more exemplary embodiments may be achieved by providing a display apparatus including: a display panel; and any one of the foregoing backlight units which provides light to the display panel.

The above and/or other aspects will become apparent and more readily appreciated from the following description of exemplary embodiments, taken in conjunction with the accompanying drawings, in which:
FIG. 1 is an exploded perspective view of a display apparatus according to exemplary embodiments.
FIG. 2 is a lateral cross-sectional view illustrating a change in a main angle of light by each component of the backlight unit of the display apparatus of FIG. 1.
FIG. 3 is a perspective view illustrating a shape of a unit pattern in the display apparatus of FIG. 1.
FIG. 4 is a perspective view illustrating a shape of a unit pattern according to other exemplary embodiments in the display apparatus of FIG. 1.
FIG. 5 is a block diagram of the display apparatus of FIG. 1.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

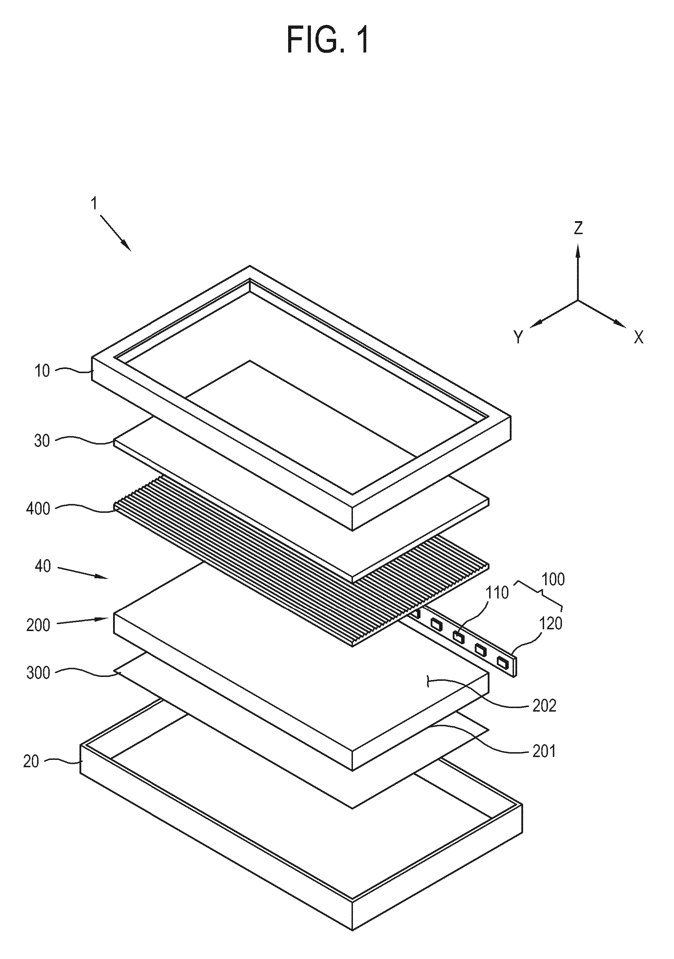

FIG. 1 is a schematic exploded perspective view of a display apparatus 1 according to exemplary embodiments.

As shown in FIG. 1, the display apparatus 1 according to exemplary embodiments may include covers 10 and 20 forming an interior space, a display panel 30 situated in the interior space by the covers 10 and 20 and displaying images on a surface thereof, and a backlight unit 40 situated in the interior space by the covers 10 and 20 and generating and providing light to the display panel 30 so that images are displayed on the display panel 30.

First, directions shown in FIG. 1 are defined as follows. Basically, X, Y, and Z directions of FIG. 1 indicate length, width, and height directions of the display panel 30, respectively. The display panel 30 is disposed on an X-Y plane, and the covers 10 and 20, the display panel 30 and the backlight unit 40 are stacked in a Z-axis. Hereinafter, the drawings including FIG. 1 and exemplary embodiments will be described on the basis of the foregoing definition of the directions. Here, opposite X, Y, and Z directions are expressed as -X, -Y, and -Z directions, respectively, and the X-Y plane means a plane defined by an X-axis and a Y-axis perpendicular to the Z-axis.

The covers 10 and 20 may form an exterior shape of the display apparatus 1 and support the display panel 30 and the backlight unit 40 which are situated inside. Defining the Z direction as a front direction/front side and the -Z direction as a rear direction/rear side based on the display panel 30 in FIG. 1, the covers 10 and 20 may include a front cover 10 supporting a front side of the display panel 30 and a rear cover 20 supporting a rear side of the backlight unit 40.

The front cover 10 and the rear cover 20 may form the interior space together and support edges of the display panel 30 and the backlight unit 40. In particular, the front cover 10 may have an opening formed on a surface thereof parallel with the X-Y plane to expose an image display area of the display panel 30 therethrough.

In exemplary embodiments, the display panel 30 may be configured as a liquid crystal display (LCD) panel. The display panel 30 may be formed of two substrates (not shown) and a liquid crystal layer (not shown) interposed therebetween and displays images on a surface thereof by adjusting alignment of liquid crystals in the liquid crystal layer (not shown) through application of driving signals. Exemplary embodiments are described with reference to an LCD display panel. But one of ordinary skill in the art will recognize that the features recited herein are applicable to any display panel that does not emit light by itself and thus is provided with light from the backlight unit 40 to display images in the image display area.

The display panel 30 of exemplary embodiments may include a driving circuit board (not shown). When a driving signal is applied from the driving circuit board, the liquid crystals (not shown) of the display panel 30 may rotate at a predetermined angle. Accordingly, light transmitting characteristics may vary in the respective cells (not shown) constituting the image display area of the display panel 30, thereby displaying images in the image display area.

The backlight unit 40 may be disposed at a rear of the display panel 30, that is, in the -Z direction relative to the display panel 30, to provide light to the display panel 30. The backlight unit 40 may include a light source unit 100 disposed on an edge of the display panel 30, a light guide plate 200 disposed parallel with the display panel 30 to face a rear side of the display panel 30, a reflection plate 300 disposed under the light guide plate 200 to face a lower side of the light guide plate 200, and a prism sheet 400 disposed between the display panel 30 and the light guide plate 200.

The light source unit 100 may generate light and radiate the generated light to enter the light guide plate 200. The light source unit 100 may be installed perpendicular to the surface of the display panel 30, that is, the X-Y plane, and disposed along at least one of four edges of the display panel 30 or the light guide plate 200.

Although the light source unit 100 is installed along a side wall on an edge positioned in the -Y direction relative to the light guide plate 200 in FIG. 1, this is an illustrative example and exemplary embodiments are not limited thereto. The light source unit 100 may be installed along any one or more of the four edges of the light guide plate 200.

The light source unit 100 may include a plurality of light emitting elements 110 sequentially disposed in the X direction and generating and radiating light and a module board 120 on which the light emitting elements 110 are mounted to turn on/off.

The light emitting elements 110 may radiate light in a direction parallel with the surface of the display panel 30, for example, in the Y direction. In the present embodiment, the light emitting elements 110 are configured as light emitting diodes (LEDs) and provided with driving power and on/off control signals from the module board 120 to turn on/off.

The light emitting elements 110 may include a blue LED, a green LED and a red LED, and blue light, green light and red light emitted from the respective colors of LEDs are mixed into white light having excellent color reproducibility. However, this is an illustrative example only, and the light emitting elements 110 may include white LEDs which themselves generate white light.

The plurality of light emitting elements 110 may be mounted on a surface of the module board 120 in the Y direction. The module board 120 may include wiring (not shown) to provide power from system power of the display apparatus 1 to the mounted light emitting elements 110, and the wiring may be capable of transmitting power by the respective light emitting elements 110.

The light guide plate 200, which is a plastic lens including acrylic materials, may uniformly transmit light incident from the light source unit 100 to the entire image display area of the display panel 30. A lower side 201 of the light guide plate 200 that is a side positioned in the -Z direction relative to the centre of the light guide plate may face the reflection plate 300, and an upper side 202 thereof that is a side positioned in the Z direction relative to the centre of the light guide plate may face the display panel 30. Among the four side walls in four directions of the light guide plate 200 formed between the upper side 202 and the lower side 201, a side wall in the -Y direction may face the light emitting elements 110. Light radiated from the light emitting elements 110 may enter the side wall in the Y direction.

The light guide plate 200 according to exemplary embodiments may include a plurality of unit patterns (not shown) distributed on the lower side 201 and reflecting light radiated from the light emitting elements 110 to the upper side 202. The unit pattern(s) will be described in detail.

The reflection plate 300 under the light guide plate 200 may reflect light exiting from an inside of the light guide plate 200 to the outside, thus heading back toward the light guide plate 200. To this end, a surface of the reflection plate 300 may have reflection characteristics.

The prism sheet 400 may collect and transmit light to the display panel 30 so that light exiting from the light guide plate 200 is transmitted substantially perpendicular to the surface of the display panel 30.

When light exits from the upper side 202 of the light guide plate 200 substantially parallel with the foregoing normal direction axis, the prism sheet 400 may collect the light. However, when light exiting at 60 degrees to the upper side 202 of the light guide plate 200 is incident to the prism sheet 400, the prism sheet 400 transmits the light by adjusting the angle to 90 degrees to the upper side of the light guide plate 200, that is, parallel with a Z-axis.

Therefore, in order that the prism sheet 400 adjusts a proceeding angle of light with respect to the display panel 30 to be parallel with the Z-axis, an angle of light exiting from the upper side 202 of the light guide plate 200 may need to be in a preset range, which may be realized by the plurality of unit patterns 210 formed on the lower side 201 of the light guide plate 200 as follows.

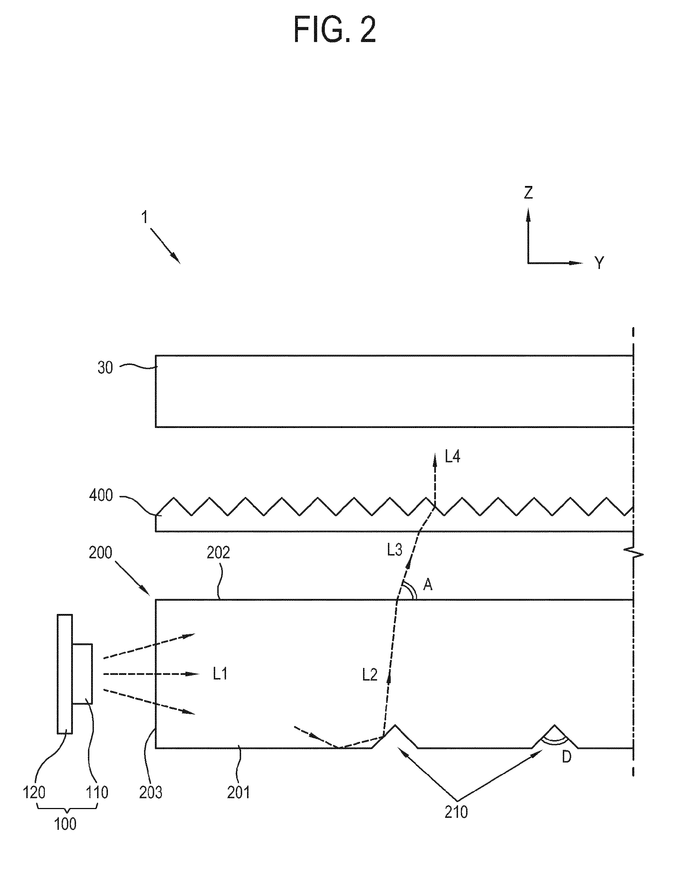

FIG. 2 is a lateral cross-sectional view illustrating a change in a main angle of light by each component of the backlight unit 40 in exemplary embodiments.

As shown in FIG. 2, the light emitting elements 110 radiate light toward the side wall 203 of the light guide plate 200 in the Y direction (L1). The light incident to the side wall 203 (L1) is transmitted in the Y direction inside the light guide plate 200 and reflected by the plurality of unit patterns 210 formed on the lower side 201 to head toward the upper side 202.

According to exemplary embodiments, a plurality of unit patterns 210 may be randomly distributed on the lower side 201. Distribution of the unit pattern(s) 210 may be modified variously based on environments, such as arrangement of the light emitting elements 110 and light emitting performance. For example, in view of uniform brightness of the display panel 30 throughout the entire area, the farther the light guide plate 200 is from the light emitting elements 110, the higher a density of the unit patterns 210 may be.

One unit pattern 210 may be engraved into the lower side 201 in a shape of a three-dimensional particle with a triangle cross section, such as a wedge or prism shape.

The light reflected by the unit pattern(s) 210 (L2) may proceed in the light guide plate 200 and exit from the upper side 202, the light with a main angle being refracted on the upper side 202 at a preset angle (A) (L3).

The light exiting from the light guide plate 200 (L3) may be collected by the prism sheet 400 and transmitted to the display panel 30 (L4). The collected light (L4) may proceed at a main angle substantially parallel with the Z-axis. In detail, the collected light (L4) may be incident at a main angle in a range of 85 to 95 degrees, preferably but not necessarily at 90 degrees to the surface of the display panel 30.

In order that the main angle of the light (L4) is approximately 90 degrees with respect to the surface of the display panel 30, the main angle (A) of the light exiting from the light guide plate 200 (L3) may have a preset value. In exemplary embodiments, the main angle (A) is in a range of 55 to 65 degrees, preferably but not necessarily at 60 degrees but may vary on environments of a device, without being limited to a specific value.

The light (L3) may come from the light (L2) reflected by the unit pattern(s) 210 and refracted on the upper side 202, and thus the main angle (A) of the light (L3) may be determined on a shape of the unit pattern(s) 210.

Hereinafter, a configuration of the unit pattern 210 in exemplary embodiments is described in detail.

One unit pattern 210 may have a preset particle shape with a cross section of an isosceles triangle, such as a wedge/prism. Here, the cross section refers to a plane surface formed by cutting the unit pattern along a Y-Z plane including a vertex toward the upper side 202.

The unit pattern 210 may be engraved into the lower side 201 such that the vertex faces the upper side 202. Here, the unit patterns 210 may be provided to totally reflect light transmitted in the light guide plate 200. To this end, the unit pattern(s) 210 may be subjected to mirror-like surface treatment. A structure of totally reflecting light may be realized by various methods, without being particularly limited. For example, the unit pattern(s) 210 may be formed by designing a mold while the light guide plate 200 is manufactured by an injection molding process.

In a conventional backlight unit, a light reflecting pattern is formed on a light guide plate by burning a lower side of the light guide plate with a laser or printing the pattern on the lower side. However, since the conventional light reflecting pattern includes a scratch due to manufacturing characteristics, it scatters light.

Thus, the plurality of unit patterns 210 according to exemplary embodiments may improve light efficiency as compared with the conventional configuration. Also, the unit pattern(s) 210 may be distributed across the entire lower side 201, thereby enhancing light uniformity on the entire display panel 30.

The unit pattern(s) 210 have a bottom side parallel with the lower side 201 and a vertex facing the upper side 202. The bottom side may be in a polygonal shape, e.g., a rectangular shape, or in a circular shape.

An angle of the vertex of the unit pattern(s) 210 facing the upper side 202 may be in a range of 110 to 120 degrees with respect to the bottom side such that the main angle of the exiting light (L3) may be a preset angle of A. If the angle of the vertex is out of the range, the angle of the exiting light (L3) and a main angle of collected light (L4) may be affected to deteriorate light efficiency. In particular, when the angle of the vertex is less than 110 degrees, an angle of reflected light may be outside a critical angle, so that the radiated light (L1) may not be reflected by the unit pattern(s) 210 but may penetrate the unit pattern(s) 210.

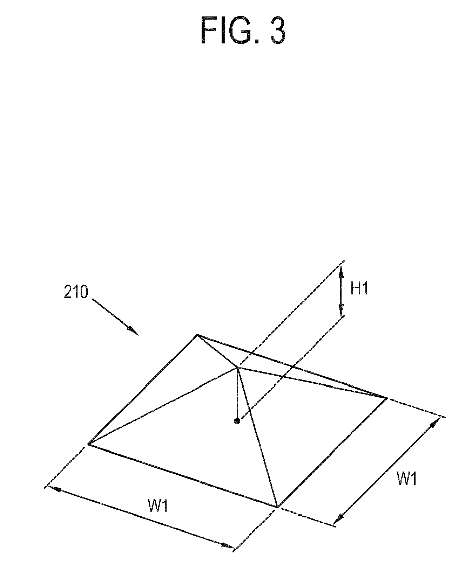

FIG. 3 is a perspective view illustrating a shape of a unit pattern 210 according to exemplary embodiments.

As shown in FIG. 3, the unit pattern 210 is in a pyramid shape having a square-shaped bottom side.

A width of the unit pattern 210 may be 100 µm or less. If the width is longer than 100 µm, local variations in brightness may occur on the display panel 30.

Defining a length of one edge of the bottom side of the unit pattern 210 as width W1 and a length between the bottom side and a vertex as height H1, a ratio of W1 to H1 may be 100:30 to 100:34. Even though the unit pattern 210 has various sizes with a width of 100 µm or less, the ratio of W1 to H1 may be 100:30 to 100:34.

With this configuration, the unit pattern 210 may reflect light so that the radiated light (L1) develops into the collected light (L4) having a main angle parallel with the Z-axis.

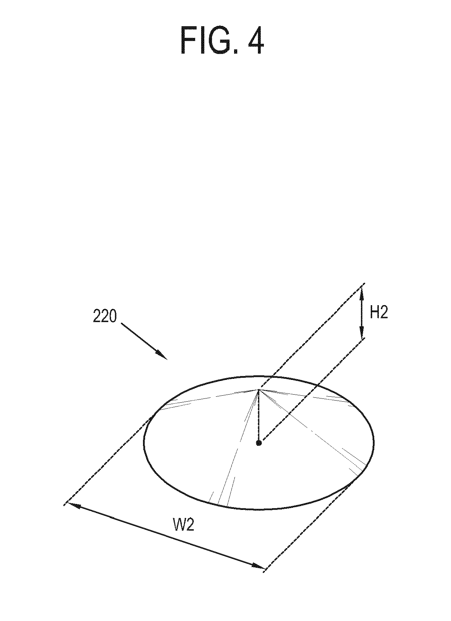

FIG. 4 is a perspective view illustrating a shape of a unit pattern 220 according to other exemplary embodiments.

As shown in FIG. 4, the unit pattern 220 may be in a conical shape having a circular bottom side. Here, defining a diameter of the bottom side of the unit pattern 220 as W2 and a height thereof as H2, a ratio of W2 to H2 may be 100:30 to 100:34. Similar to FIG. 3, in conditions where the unit pattern 220 has a width of 100 µm or less and a ratio of W2 to H2 is 100:30 to 100:34, the unit pattern 220 may have various sizes.

As described above, the light guide plate 200 according to the present embodiment may include the unit pattern(s) 210 having a particle shape and reflecting radiated light, which are engraved into and distributed on the lower side 201. Accordingly, light efficiency may be improved as well as light may be provided such that uniform brightness is secured across the display panel 30 without a diffusion sheet (not shown) for scattering/diffusing light being disposed between the display panel 30 and the light guide plate 200.

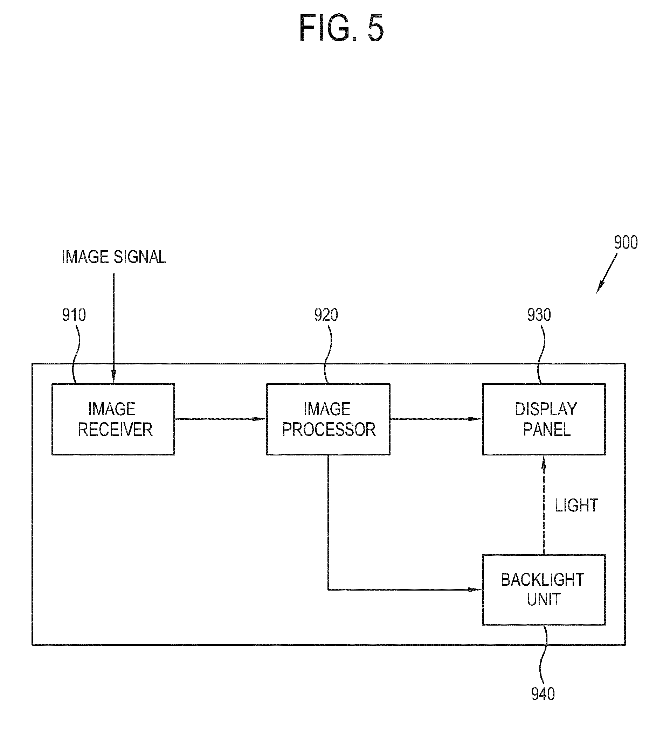

The above described embodiments may be applied to a display apparatus 900 configured in various types (television, computer monitor, etc.). FIG. 5 is a block diagram illustrating a configuration of the display apparatus 900 according to exemplary embodiments. In FIG. 5, a solid line indicates transmission of an image signal or control signal, and a dotted line indicates transmission of light.

As shown in FIG. 5, the display apparatus 900 according to exemplary embodiments may include an image receiver 910 receiving image signals from an external source, an image processor 920 processing image signals received by the image receiver 910, a display panel 930 displaying images based on image signals processed by the image processor 920, and a backlight unit 940 providing light so that images are displayed on the display panel 930.

The image receiver 910 may receive image signals/image data through a wire or wirelessly and transmits the image signals/image data to the image processor 920. The image receiver 910 may be configured as various types corresponding to standards of received image signals. For example, the image receiver 910 may receive radio frequency (RF) signals or image signals according to composite/component video, super video, SCART, and high definition multimedia interface (HDMI), DisplayPort, unified display interface (UDI), or wireless HD standards.

The image processor 920 may perform various preset image processing processes on image signals and outputs the processed image signals to the display panel 930, so that images are displayed on an image display side of the display panel 930. The image processor 920 may perform various processes, without being particularly limited, for example, decoding corresponding to various image formats, de-interlacing, frame refresh rate conversion, scaling, noise reduction to improve image quality, detail enhancement, etc.

The image receiver 910 and the image processor 920 may be configured as image processing boards (not shown) embedded in the display apparatus 900.

The display panel 930 and the backlight unit 940 may have substantially the same configurations as those in the foregoing embodiments, and thus descriptions thereof are omitted.

Although a few exemplary embodiments have been shown and described, it will be appreciated by those skilled in the art that changes may be made in these exemplary embodiments without departing from invention, the scope of which is defined in the appended claims.

## Claims

1. A backlight unit of a display apparatus, the backlight unit comprising:
a light source unit which is disposed on at least one of edges of a display panel;
and
a light guide plate which is disposed at rear of the display panel so as to transmit light radiated from the light source unit to the display panel and comprising a lower side formed with a plurality of distributed unit patterns reflecting the radiated light and an upper side transmitting the light reflected by the unit patterns,
any one of the unit patterns comprising a particle shape engraved into the lower side and totally reflecting the radiated light to the upper side.

2. The backlight unit of claim 1, wherein the unit patterns comprise a bottom side parallel with the lower side and a vertex facing the upper side and are engraved into the lower side.

3. The backlight unit of claim 2, wherein the bottom side of the unit patterns is polygonal-shaped.

4. The backlight unit of claim 3, wherein the unit patterns have a ratio of width to height of 100:30 to 100:34.

5. The backlight unit of claim 2, wherein the unit patterns have a pyramid shape having a square-shape bottom side.

6. The backlight unit of claim 5, wherein a ratio of a length of one edge of the bottom side to a length from the bottom side to the vertex is 100:30 to 100:34.

7. The backlight unit of claim 2, wherein the unit patterns have a conical shape having a circular bottom side.

8. The backlight unit of claim 7, wherein a ratio of a diameter of the bottom side to a length from the bottom side to the vertex is 100:30 to 100:34.

9. The backlight unit of claim 2, wherein an angle of the vertex is in a range of 110 to 120 degrees.

10. The backlight unit of claim 1, wherein a width of the unit patterns is 100 µm or less.

11. The backlight unit of claim 1, further comprising a prism sheet which is interposed between the display panel and the upper side of the light guide plate and collecting light exiting from the upper side.

12. The backlight unit of claim 11, wherein the unit patterns reflect the radiated light such that a main angle of the light exiting from the upper side is in a range of 55 to 65 degrees with respect to a surface of the upper side, and the prism sheet collects the light exiting from the upper side to be at an angle in a range of 85 to 95 degrees with respect to the surface of the upper side.

13. A display apparatus comprising:
a display panel; and
a backlight unit according to anyone of claims 1 to 12.
